# EUROPEAN PATENT APPLICATION

(11) **EP 4 727 073 A1**
(43) Date of publication of application: **15.04.2026**
(21) Application number: 25208303.5
(22) Date of filing: 13.10.2025
(51) Int. Cl.: H04L 27/00, H04L 27/26, H04W 72/04, H04W 72/115, H04W 74/0808

(54) **COMMUNICATION SYSTEMS AND METHODS WITH CHANNEL DETECTION FOR RECOVERY**

(30) Priority: 14.10.2024 US 202418915156
(71) Applicant: Avago Technologies International Sales Pte. Limited, Singapore 768923 (SG)
(72) Inventor: Agarwal Singhal, Kamal, Irvine, 92618 (US); Javvadi, Varaprasad, Irvine, 92618 (US); Bhukania, Bijoy, Irvine, 92618 (US); Kanchi, Venkateswara Rao, Irvine, 92618 (US); Prabhakaran, Dinakar, Irvine, 92618 (US); Srinivasan, Sudharshan, Irvine, 92618 (US); Rajashekar, Rakshith Mysore, Irvine, 92618 (US)
(74) Representative: Dilg, Haeusler, Schindelmann Patentanwaltsgesellschaft mbH

(57) **Abstract**

A wireless device can include a first radio configured to transmit over a first link and a second link of a first wireless band. to a first device. The first device includes a circuit configured to provide data across a connection comprised of one or more links to a second device. The circuit is configured to detect a presence of at least a portion of a packet using a relationship of a guard tone and a signal tone in a bandwidth. The wireless device may be able to recover from blindness with less latency.

## Description

### Field of the Disclosure

This disclosure generally relates to systems and methods for communication between a station (STA) and access point (AP) (e.g., in a wireless local area network) or between other communication devices.

### Background of the Disclosure

In the last few decades, the market for wireless communications devices has grown by orders of magnitude, fueled by the use of portable devices, and increased connectivity and data transfer between all manners of devices. Digital switching techniques have facilitated the large scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wireless communication can operate in accordance with various standards such as IEEE 802.1 1x, Bluetooth, global system for mobile communications (GSM), code division multiple access (CDMA). As higher data throughput, density of networks, and other changes develop, newer standards are constantly being developed for adoption, such as a progression from IEEE 802.11n to IEEE 802.11ac, ax, or be. Network devices can operate as a client stations (STAs), access points (APs), or mobile APs. IEEE 802.11be defines an EMLSR (Enhanced Multi-Link Single-Radio) feature for non-AP STAs. Interference and traffic collisions can hinder network performance.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGS. 1B and 1C are block diagrams depicting computing devices useful in connection with the methods and systems described herein, according to some embodiments.
FIG. 2 illustrates a wireless network, according to some embodiments.
FIG. 3A is a general block diagram of an AP or STA for the network illustrated in FIG. 2, according to some embodiments.
FIG. 3B is a waveform diagram showing signals in a bandwidth for the network illustrated in FIG. 2, according to some embodiments.
FIG. 4 is a flow diagram for communication in the network illustrated in FIG. 3 using a packet detection scheme, according to some embodiments.
FIG. 5 is a flow diagram for communication in the network illustrated in FIG. 3 using a packet detection scheme over multiple bandwidths, according to some embodiments.
FIG. 6 is a graph showing probability of packet presence according to some embodiments.
FIG. 7 is a graph showing probability of a false alarm of packet presence according to some embodiments.

The details of various embodiments of the methods and systems are set forth in the accompanying drawings and the description below.

### Detailed Description

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11be^{™}, IEEE 802.11bn^{™}, IEEE 802.11g^{™}, IEEE P802.11n^{™}; and IEEE P802.11ac^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of packet detection and blindness recovery protocols and methods and devices using such protocols.

In some embodiments, systems and methods quickly synchronize with a communication medium, thereby allowing quicker access to the medium and avoiding any on-air collisions. Significant performance gains can be achieved in wireless embodiments in some embodiments. The systems and methods can be used with WiFi technologies and non-Wi-Fi technologies (like LTE-U, LAA, etc.). Synchronize or synchronization can refer to a process that ensures that the transmitted signals are correctly aligned in time and/or frequency in some embodiments. Proper synchronization allows devices to coordinate the transmission and reception of frames to avoid collisions and ensure efficient use of the wireless medium and/or can facilitate power-saving mechanisms, allowing devices to sleep and wake at appropriate times without missing communication opportunities in some embodiments. Synchronization in various modes can be performed according to IEEE standards in some embodiments.

Various client devices can operate as station (STA) devices employing single link operations and multilink operations using one or more radios (e.g., multiple-link-single-radio (MLSR)). For example, the client devices can employ MLSR radios for each of various bands (e.g., a 2.4GHz band, a 5GHz band, or a 6GHz band). Various STA devices can operate as APs or non-APs. A non-AP device is often a client to an AP device. In some cases, a non-AP device can be configured as a mobile AP or a portable hotspot in which case it can support other non-AP devices as its clients. An AP/mobile AP and its client(s) can communicate using multi-link operation using one or more radios over multiple links. The APs and clients can be used in any communication environment including but not limited to WLAN, LTE, LTE-U, LAA, 5G, 6G, etc. environments.

In some embodiments, an enhanced multi-link single-radio (EMLSR) operation can involve a STA associated to a multi-link AP (e.g., an AP operating simultaneously on two or more different links/channels). The STA can be configured to dynamically switch between the links on a per-TXOP (transmit opportunity) basis when communicating with the AP. Many technologies including WLAN technologies deploy carrier sense multiple access with collision avoidance (CSMA-CA) as a network protocol to manage how data packets in wireless local area networks (WLANs) are transmitted over a shared communication medium (e.g., one or more wireless links). CSMA-CA employs carrier sensing to check if a wireless channel is free or already in use. If the channel is found to be idle (free of traffic), the device waits for a random backoff time before sending its data. This backoff time helps to avoid collisions that might occur if multiple devices sense that the channel is free at the same time and try to transmit simultaneously.

If the channel is busy, the device continues to listen until it becomes idle, waits for the backoff time and attempts to transmit. After successfully transmitting the data, the sender expects an acknowledgment (ACK) from the receiver. If the ACK is received, the received ACK indicates the transmission was successful. If an ACK is not received (indicating a possible collision), the sender assumes the transmission failed and tries again after another backoff period.

If a device does not have the ability to sense the carrier (e.g., for CSMA-CA) at a particular time or does not perform a sensing operation, the device is considered blind or as having entered a blind state. While blind, the device may lose or not receive the preamble of an incoming packet and thereby lose synchronization with the medium. A preamble may be lost due to a collision or other interference.

When the device achieves synchronization with the medium before accessing the medium, the device can more easily avoid on-air collisions and thereby improve network throughput. Current mechanisms to achieve this synchronization are sub-optimal due to very high latency and the coverage of the received signal strength indicator (RSSI) region. The RSSI is a measure of the power level that a wireless device receives from a signal being transmitted over a wireless network, such as Wi-Fi, Bluetooth, or cellular networks. RSSI can be used to determine the quality and strength of the wireless connection. An RSSI value refers to RSSI data represented by a number in some embodiments.

In some embodiments, systems and methods provide quicker recovery from temporary blindness. In some embodiments, an orthogonal frequency division multiplexing (OFDM) detector is used to detect free communication links with very lower latency and less coverage of the RSSI region. In some embodiments, a robust detector is configured to detect the presence of very low RSSI OFDM packets on air right after blindness. In some embodiments, systems and methods yield multiple orders of improvement in latency, thereby achieving quick synchronization and better network efficiency.

In some embodiments, an OFDM detector is configured to detect the presence of a WLAN OFDM packet even of low signal strength. The OFDM packet is detected even if a preamble is missed due to blindness in some embodiments. In some embodiments, systems and methods perform spectral analysis of the incoming signal and compares the components of the incoming against the expected spectrum of any OFDM WLAN packet. In some embodiments, a detector receives the bandwidth of the signal and compares energy on the loaded and unloaded tones against expected guard tones of any WLAN packet to detect a packet presence. This comparison allows differentiation between any WLAN OFDM packet from other on-air signals without any timing or frequency synchronization in some embodiments. The presence of spectrum usage can be detected by any technology or circuitry. In some embodiments, guard tones are not utilized to detect the packet and other spectral components (e.g., pilot tones) are utilized. In some embodiments, systems and methods detect OFDM on air and include a cyclic prefix (CP) detector, and autocorrelation of the time domain signal across different lags is analyzed to determine on OFDM symbol length and thereby presence of an OFDM signal on air.

Blindness refers to scenarios where a network node or device is unable to detect or respond to certain signals, data, or conditions within the network in some embodiments. Temporary blindness refers to blindness that is not permanent in some embodiments. Blindness can occur due to a variety of reasons including but not limited to interference, signal attenuation, or limitations in the design of the network protocol, features, or hardware. For example, blindness can occur with respect to secondary packets having an RSSI of less than -72 decibel mill-watts (dBm) in a 20MHz bandwidth (BW). In a lower BW transmission, the preamble of the secondary sub-band packet may be lost if a device is transmitting on other sub-bands during the time. Features such as dynamic transmit BW can cause blindness associated with packets using this feature. Performing only primary sensing can also cause blindness. For example, features such as EMLSR and power save options can limit the ability to sense outside of the primary channel 20 MHz BW. Sensing only the 20MHz primary BW can also cause blindness. Preamble loss on a secondary channel during PCF inter frame spacing (PIFS) sensing can also cause blindness. Blindness can also be related to different secondary packets on different sub-bands because a single physical layer (PHY) detector/decoder only identifies one secondary packet in certain situations. Further, blindness can be caused by time-overlapped secondary packets because the sources of such packets are hidden from each other. Blindness can also occur on a primary sub-band. For example, in EMLSR operations, medium sync recovery as defined in the IEEE standard only resolves the blindness issue completely for packets with an RSSI greater than -72 dBm. In watchdog operations, monitoring activities and re-configuration of the blocks causes deafness in the system. During this time, synchronization with the medium is lost. Blindness can also occur when time-overlapped packets as the sources of packets are hidden from each other on the primary sub-band. In operations related to sleep modes for power savings, co-existence with other technologies, etc., wake up after such events has the same operational issues as a wake up after blindness. The systems and methods can be employed after wake-up for faster synchronization.

A mobile AP can be a non-simultaneous transmit-receive (NSTR) device over a pair of links as already defined in the 802.11 standards. Further, an AP or a mobile AP can be an EMLSR device over a pair of links. An EMLSR AP/mobile AP communicates using EMLSR operation over multiple links with its clients. In some embodiments, multiple EMLSR APs can advantageously coordinate their link-switches. Two such client devices can communicate via non simultaneous transmit and receive (NSTR) links on one or more links. For example, the two clients can operate between 2.4 GHz, 5 GHz, and 6 GHz links. A network can include arbitration mechanisms or other methods to determine a transmit opportunity (TXOP) within a subnetwork, such as a basic service set (BSS) of devices including client devices (e.g., STAs) which can communicate via an access point (e.g., an AP or mobile AP).

In some embodiments, an AP and/or client supports the packet detection and recovery after blindness protocols described herein. The protocols are implemented in 802.11 AP and non-AP STA chips or integrated circuits ICs disposed in a package.

Some embodiments relate to a first device. The first device includes a circuit configured to provide data across a connection comprised of one or more links to a second device. The circuit is configured to detect a presence of at least a portion of a packet using a relationship of a guard tone and a signal tone in a bandwidth.

A connection refers to any established communication link or links for two devices. A connection can be established after discovery, authentication, and association in some embodiments. Device refers to any type of electronic device used in communication in some embodiments. Bandwidth refers to a portion of the electromagnetic spectrum in some embodiments. Bandwidth can be a subband, a channel or portion thereof, or a link or portion thereof in some embodiments. A relationship may refer to a correlation, link, or other association. For example, a relationship may involve a comparison, a mathematical operation, or a logical operation. A relationship can be a greater than, equal to, or less than relationship or involve subtraction, addition, multiplication, division, etc. in some embodiments.

In some embodiments, the bandwidth is 20 megahertz. In some embodiments, the circuit is configured to detect the presence using a relationship of the signal tone to a first threshold. In some embodiments, the first threshold is a fixed threshold. In some embodiments, the circuit is configured to detect the presence using a comparison of the relationship of the guard tone and the signal tone in the bandwidth to a second threshold. In some embodiments, the packet is a orthogonal frequency domain multiplexing packet. In some embodiments, the packet is a wideband packet. In some embodiments, the circuit is part of an access point or station. A comparison refers to a determination of a relationship such as greater than, equal to, or less than relationship or combination thereof in some embodiments.

Some embodiments relate to a first device including a circuit configured to provide packets across a connection including one or more links to a second device. The circuit includes a spectrum module configured to provide spectrum data indicative of energy in a bandwidth and a detector configured to detect a presence of at least a portion of a packet using the spectrum data in response to a relationship of energy of a guard tone and a signal tone in the bandwidth. A detector refers to a circuit or software for detecting a condition in some embodiments. Detecting or detect refers to an act or operation of discovering or identifying a condition or characteristic in some embodiments. A spectrum module or software refers to a circuit or software for obtaining spectrum data condition in some embodiments. Spectrum data refers to data representing energy at particular frequencies in some embodiments.

In some embodiments, the circuit is used to recover from blindness. In some embodiments, the circuit is configured to detect the packet without detecting a preamble. In some embodiments, the spectrum data comprises received-signal-strength-indicator (RSSI) values. In some embodiments, the detector is configured to detect using a relationship of the guard tone and the signal tone in the bandwidth. In some embodiments, the detector is configured to detect the presence using a relationship of a set of signals tones to a first threshold. In some embodiments the relationship of the guard tone and the signal tone is compared to a threshold. In some embodiments the threshold is 8 decibels.

Some embodiments relate to a method of recovering from blindness in a communication system. The method includes providing spectrum data for a bandwidth indicative of energy, determining a first relationship between a set of signals tones in the bandwidth is above a first threshold using the spectrum data, determining a second relationship between energy of a guard tone and a signal tone in the bandwidth using the spectrum data, and detecting a presence of at least a portion of a packet in response to the first relationship and the second relationship.

In some embodiments, the second relationship is a difference between the energy of the guard tone and the signal tone. In some embodiments the first relationship is a comparison of the signal tone and a threshold. In some embodiments, the threshold is a noise threshold. A noise threshold refers to a level of energy associated with noise in a bandwidth in some embodiments. The energy associated by the noise threshold can be associated with various sources. The noise threshold level is dependent on environment, protocols, device capabilities, mitigation techniques, etc.

### A. Computing and Network Environment

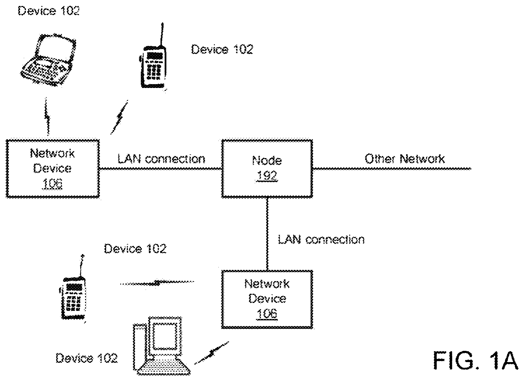

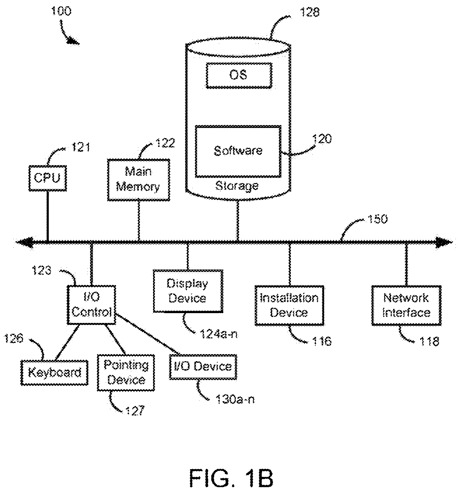

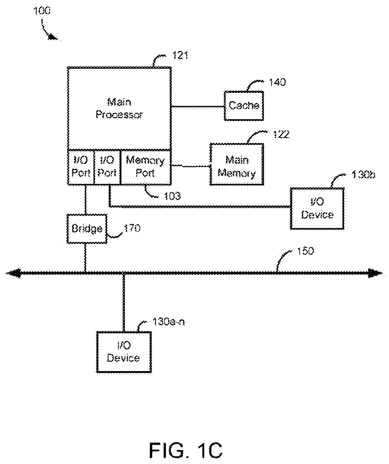

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.1 1a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Station and AP Communication

Disclosed herein are systems and methods of blindness recovery and packet detection, which can be used by any of the devices described herein and with respect to FIGS. 1A-C. A STA may refer to any device for communicating in communication system and includes but is not limited to a fixed, portable, or mobile laptop, desktop personal computer, personal digital assistant, access point, work station, wearable device, smart phone, or Wi-Fi phone in some embodiments. An access point (AP) may refer to a device for communicatively coupling one or more non-AP devices (e.g., a client or client device) to a network in some embodiments. More specifically, an AP may enable non-AP devices to connect and communicate with a network. In some embodiments, an AP may be a wireless access point (WAP) configured to enable wireless communication between non-AP devices. An AP includes but is not limited to a mobile, portable, or fixed hot spot, router, bridge, or other communication device. The AP or Sta can communicate data in the form of a data packet. A packet or data packet refers to a structured unit of data that is transmitted over a network in some embodiments. The data packet can be an IEEE 802.11 packet. The packet can include a preamble and a payload. The packet is a management frame, a data frame or a control frame in some embodiments. A preamble refers to part of a packet. The preamble can be used to prepare wireless medium for the transmission of data and ensure that the receiving device can properly synchronize and decode the incoming signal. The preamble can include a synchronization field, a short training field and a long training field. The preamble can support multi-user MIMO, channel bonding, and advanced modulation schemes. An orthogonal frequency domain multiplexing packet refers to a packet provided using a digital transmission technique that uses multiple subcarriers within a single channel to transmit data in some embodiments. The subcarriers can be closely spaced and transmit in parallel, carrying low-bit rate data. Orthogonal frequency domain multiplexing often used for high data-rate transmission over mobile wireless channels, as well as in digital audio broadcasting, DSL internet access, and power line networks. A wide band packet refers to a packet using a wide band protocol such as a single-channel modulation scheme in some embodiments.

A radio may refer to a device to wirelessly communicate data, in some embodiments. A band may refer to a predefined portion of wireless spectrum, in some embodiments. For example, a wireless band can include contiguous spectrum according to as standard such as 5030-5990 MHz, 5945-7125 MHz, 2401-2495 MHz, or the like. A link may refer to a subdivision of a band for wireless communication between radios or another channel for communication such as a wired link for communication (e.g., Ethernet). The link can include a frequency subdivision, time-subdivision, combination thereof, or the like. A multiple-link-single-radio (MLSR) may refer to a radio configured to selectively operate over at least two links (e.g., two links of at least one band). For example, the MLSR radio can operate over the links responsive to wireless spectrum congestion, or to increase throughput by alternating transmissions or receptions therebetween. For example, an MLSR may operate over a primary link, a secondary link, and so on. A primary link may refer to a default, initial, or first link available to a device, such as a device including an MLSR radio in some embodiments. A secondary link may refer to a non-default, alternate, or second link available to a device, such as a device including an MLSR radio in some embodiments. Simultaneous monitoring (e.g., of bands or links) may refer to a radio monitoring multiple bands or links such that an existence or a content of a wireless message on any of the bands or links can be detected, in some embodiments. Content of a message may refer to information in a body of a message, header of a message, preamble of a message, or the like in some embodiments.

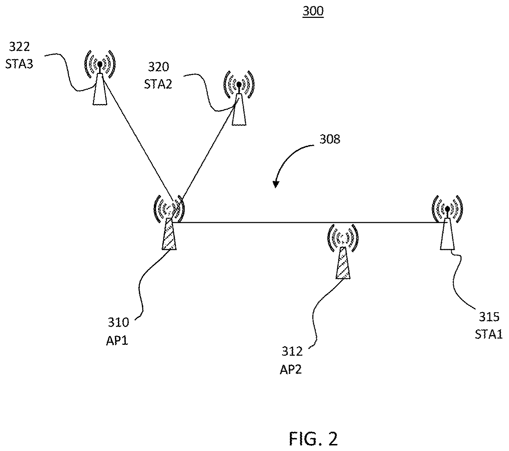

FIG. 2 is a network diagram 300 of a BSS 305, according to some embodiments. The BSS 305 can include an AP 310 (e.g., a mobile AP 310) and one or more STAs (e.g., non-APs). For example, the BSS 305 can include a first STA 315, a second STA 320, and a third STA 322. An AP 312 can also operate in the vicinity of BSS 305. The various devices of BSS 305 as well as AP 312 can detect an other BSS (OBSS) communication of one or more OBSS according to a position, gain, or other characteristics thereof. For example, an AP 310 can detect OBSS communication from a first OBSS, or a first STA 315 can detect OBSS communication from a second OBSS. One or more sideband links can interconnect various devices of the BSS 305. For example, the sideband links can be a different wireless link on a same or different wireless band of a same wireless network (e.g., a 2.4 GHz band). In some embodiments, the various devices of BSS 305 are configured for packet detection and blindness recovery protocols as described below.

The first OBSS or the second OBSS can include various AP or STA devices. The OBSS communication can include uplink transmissions, downlink transmissions, broadcast messages, ad hoc messages, or the like. The BSS 305 can include a primary link and secondary link of a band of a wireless network. In some embodiments, BSS 305 can employ sideband communication between the BSS 305 and various OBSS.

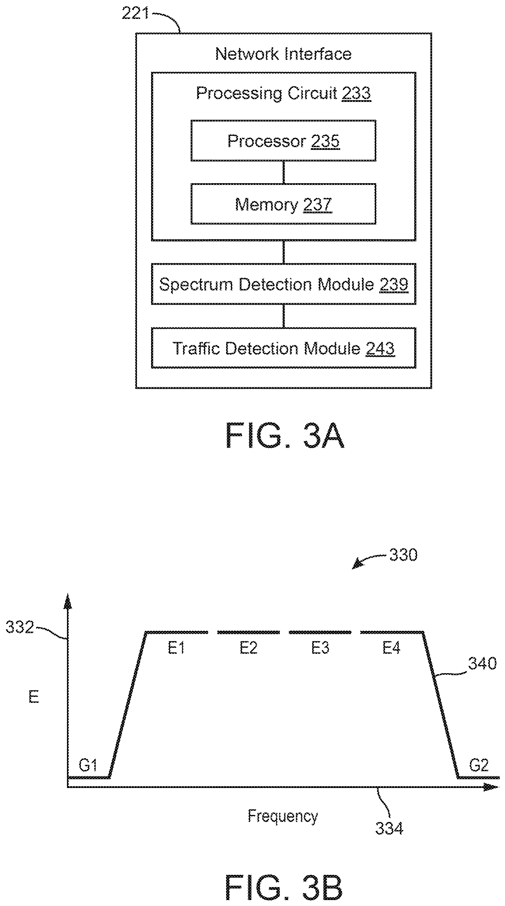

Referring to FIG. 3A, a device 221 is an AP 310 or 312 or one of STAs 315, 320 and 322 (FIG. 2) and is configured for protocols and operations as described below according to some embodiments. In some embodiments, device 221 includes a processing circuit 233, a spectrum detection module 239, and a traffic detection module 243. The processing circuit 233 is any circuitry or components that can perform logic and communication processing operations and can include a processor 235 and a memory 237 in some embodiments.

In some embodiments, the processing circuit 233 is implemented as a field-programmable gate array, an application-specific integrated circuit, hardware, a software executing processor, or state machines. In some embodiments, the processing circuit 233 is part of layers (e.g., MAC, network, PHY layers) of IEEE 802.11 standard devices. The processing circuit 233 can be configured to perform communication operations, frame building and processing, discovery operations, association operations, authorization operations, connection setup, disassociation operations, handoff operations, detection operations, and deauthentication operations in some embodiments. Instructions for the processing circuit 233 are stored in a non-transitory medium such as memory 237 in some embodiments.

The memory 237 may be one or more devices (e.g., RAM, ROM, Flash memory, hard disk storage) for storing data and/or computer code for completing and/or facilitating the various processes described herein. The memory 237 may be or include non-transient volatile memory, non-volatile memory, and non-transitory computer storage media. Memory 237 may include database components, object code components, script components, or any other type of information structure for supporting the various activities and information structures described herein. Memory 237 may be communicably coupled to the processor 235 and include computer code or instructions for executing one or more processes described herein. The processor 235 may be implemented as one or more application specific integrated circuits (ASICs), field programmable gate arrays (FPGAs), a group of processing components, a software executing processor, state machines or other suitable electronic processing components. As such, AP or network device 106 (FIG. 1A) is configured to execute a variety of modules and/or programs and store associated data in a database of the memory 237. The modules (e.g., modules 239 and 243) can be implemented in AP software (e.g., MAC layer or PHY layer software) or STA software (e.g., MAC layer or PHY layer software). In some embodiments, the AP 310 or STA 315 (FIG. 2) is structured and used to establish connections and hand off access to other computing systems and devices (e.g., wireless communication device(s) 102, network hardware 192, other access points or network devices 106, (FIGS. 1A-C) via a network (e.g., WAN connection, LAN connection, WLAN connection, etc.).

The spectrum detection module 239 and traffic detection module 243 are configured to provide frame detection and/or blindness recovery operations in some embodiments. For example, spectrum detection module 239 and traffic detection module 243 can be configured to detect the presence of a packet or portion thereof (e.g., WLAN OFDM packet) even of low signal strength. The OFDM packet is detected even if a preamble is missed due to blindness in some embodiments.

In some embodiments, spectrum detection module 239 is configured to sample spectral characteristics on channels of the medium, and traffic detection module 243 is configured to perform spectral analysis to detect a presence of a packet. In some embodiments, traffic detection module 243 is configured to compare the components of the sample against the expected spectrum of any packet (e.g., an OFDM WLAN packet) If the sample matches or sufficiently matches the expected spectrum, a packet is detected. In some embodiments, traffic detection module 243 receives the spectral analysis in the form of energy per frequency and compares energy on loaded and unloaded tones against expected energy of guard tones. If the spectrum of energy matches or sufficiently matches the energy of expected guard tones and signal tones, a packet is detected. This comparison allows differentiation between any WLAN OFDM packet from other on-air signals without any timing or frequency synchronization in some embodiments. In some embodiments, traffic detection module 243 receives the spectral analysis in the form of energy per frequency and compares energy on loaded and unloaded tones against expected energy of pilot tones. If the spectrum of energy matches or sufficiently matches the energy of expected pilot tones and signal tones, a packet is detected. In some embodiments, traffic detection module 243 detects OFDM packets on air and includes a cyclic prefix (CP) detector in some embodiments Traffic detection module 243 uses autocorrelation of the time domain signal across different lags to determine on OFDM symbol length and thereby detects presence of an OFDM signal or packet on air in some embodiments.

Guard tones refer to subcarrier frequencies used to provide signals (data) in a signal spectrum (e.g., the OFDM signal spectrum) in some embodiments. Guard tones refer to unused subcarrier frequencies at the edges of a signal spectrum (e.g., the OFDM signal spectrum) in some embodiments. Guard tones are not modulated with data and are essentially left as zero or "null" subcarriers. Guard tones help mitigate interference and prevent overlap between adjacent channels or subcarriers in some embodiments. Guard tones also known as guard bands or guard subcarriers and can be edge guard tones or center guard tones (e.g., a pilot tone refers to a sub carrier signal that provides a known reference signal in some embodiments). Pilot tones are generally placed at regular intervals within a spectrum (OFDM spectrum) which allows the receiver to interpolate channel state information across all subcarriers, ensuring accurate channel estimation throughout the entire signal bandwidth in some embodiments. In a 20 MHz bandwidth with 64 subcarriers, 4 tones are pilot tones and 12 tones are guard tones according to certain IEE 802.11 standards.

Spectrum detection module 239 can use any technology and/or circuitry to sample energy in the spectrum. Spectrum detection module 239 can include a spectrum sampling circuit that measures the magnitude of an input signal versus frequency within a specified frequency range. Spectrum detection module 239 can scan Wi-Fi channels using one or more radios associated with device 221. Spectrum detection module 239 can be a physical layer device and can be controlled by software (e.g., MAC layer software). Spectrum detection module 239 can select one or more channels and channel widths for obtaining spectrum data. The spectrum data can include RSSI data. Fast Fourier transform (FFT) technology can be utilized. Spectrum detection module 239 can utilize one or more radios and can perform simultaneous detection on multiple BWs or channels using multiple radios in some embodiments.

In some embodiments, spectrum detection module 239 takes a 2812.8 microsecond sample for a full BW spectrum analysis. The full BW can include each 20 MHz sub band in a link in some embodiments. Spectrum detection module 239 detects a presence of an OFDM packet on air in any subband. Each subband can be checked to determine if the packet is a wideband packet in some embodiments. Traffic detection module 243 can use any technology and/or circuitry to compare spectrum data from spectrum detection module 239 to expected spectrum indicative of a free channel or a used channel. The expected data can include RSSI data. Traffic detection module 243 can include a memory for storing expected guard tones or pilot tones.

Traffic detection module 243 can be a physical layer device or can be implemented by software (e.g., MAC layer software). Pattern matching circuitry or software can be utilized in some embodiments. In some embodiments, traffic detection module 243 detects traffic in less than 25 microseconds (e.g., less than 12.8 microseconds). In some embodiments, spectrum detection module 239 samples tones outside of the guard tone and the guard tones. The sampling period can be over a time associated with an expected presence such tones when a channel is being used. The data associated with the sample is provided to traffic detection module 243 which divides the energy in the non-guard tone by the energy of the guard tone (e.g., average thereof) or subtracts the nonguard tone by the energy of the guard tone. Traffic detection module 243 compares quotient or difference to an expected threshold. If the energy is above the threshold, presence of traffic is detected.

With reference to FIG. 3B, a graph 330 includes an X-axis representing frequency and a Y axis 334 representing energy. X axis 334 can represent a bandwidth for a channel in network 300 (FIG. 2B). The bandwidth of curve 340 is 20 MHz in some embodiments. Curve 340 represents energy levels at frequencies associated with signal tones E1-E4 and guard tones G1 and G2. Tones E1-4 and G1-2 represent six regions.

Tones E1-E4 do not necessarily have energy and energy E1E-E4E are four contiguous sections (tones E1-E4) of average power in some embodiments. Tone E1 and E4 neighbor guard tones G1 and G2 in some embodiments. The energy of guard tones G1 and G2 is G1E and G2E, respectively. Guard tones G1 and G2 are null tones and have minimal or low energy according to WiFi protocols. Tones E1-E4 are filled tones and have energy E1E-E4E, respectively. As discussed above, filled tone energy E1E-E4E is compared to average guard tone energy G1E and G2E to determine a packet presence. Each 20 MHz bandwidth can be checked for packet presence. Guard tone G1 and guard tone G2 can represent a group of tones and are edge tones in some embodiments.

In some embodiments, traffic detection module 243 compares energy E1E-E4E to a power threshold associated with noise for wideband detection. If each of energy E1E-E4E is above a noise power threshold (e.g., -90 to -60 dBm,. -72dBM), activity is in all the four tones E1-E4 or is wide enough to be classified as a wide band packet. Since minimum transmission unit in WLAN is of 20 MHz, this condition of four tones exceeding the threshold reduces probability of false alarm by discarding detection on any one narrow band signal. In some embodiments, If each of energy E1E and E4E (neighboring tones G1 and G2) is above a noise power threshold (e.g., -90 to -60 dBm,. -72dBM), activity can be classified as a wide band packet. For unloaded criteria (e.g., one of E1E-E4E is less than noise threshold), the condition E1E - G1E > threshold (th) or (E4E - G2E > threshold is used check for presence of a guard band which indicates a spectral shape of WLAN signal on both the edges of the waveform associated with curve 340. Since the number of samples required are the same as the FFT size, the detection can be performed in 12.8 microseconds and additional hardware is not required in some embodiments. If both of these conditions (all of energy E1E-E4E is above a noise threshold and E1E - G1E > th or (E4E - G2E > th) are satisfied on a particular sub band, the particular sub band has a Wi-Fi energy and an OFDM packet is present. If these conditions are not satisfied, synchronization can begin.

Exemplary numbers of guard tones for different types of WiFi packets are given in Table 1 below. The number of edge guard tones for non-high throughput (HT), HT and very high throughput (VHT) packets increases by a factor of against high efficiency (HE)/extremely high frequency(EHT) packets. Only edge-subbands have guard tones and the guard tones are only on the edge side in some embodiments. Guard tone power or energy (G1E and G2E) can be computed as per the HE 20 MHz tone plan in some embodiments. Loaded tone power or energy (E1E. E2E, E3E, E4E) for comparison can be computed as per non-HT 20 MHz BW tone plan.

**Table 1 - Number of Guard Tones**

| Number of Guard Tones Across Different Packet Type In Units of 78.125 kilohertz | | | |
|---|---|---|---|
| BW | non-HT | HT/VHT | HE/EHT |
| 20 | 24, 20 | 16, 12 | 6, 5 |
| 40 | | 24, 20 | 12, 11 |
| 80 | | 24, 20 | 12, 11 |
| 160 | | 24, 20 | 12, 11 |
| 320 | | | 12, 11 |

As shown in Table 1, the least number of guard tones are present in bandwidths for HE/EHT configurations. In some embodiments, module 243 uses the number of tones in G1 sub band subgroup and G2 subgroup as 5 or 6, and distributes the remaining E1,E2, E3, E4 remaining loaded tones which allows detection the presence of packets for non-HT, HT and VHT and HE/EHT configurations. For example, the guard tone size is 6 tones on G1 and 5 tones on G2 and the remaining tones are distributed among E1, E2, E3 and E4 for checking on the wideband criteria one (one of E1E-E4E below the noise threshold indicates a non-wideband packet). Running this one configuration is sufficient to obtain the information about the presence of Wi-Fi packets because subclassifying into subcategories for the group is not necessary in some embodiments.

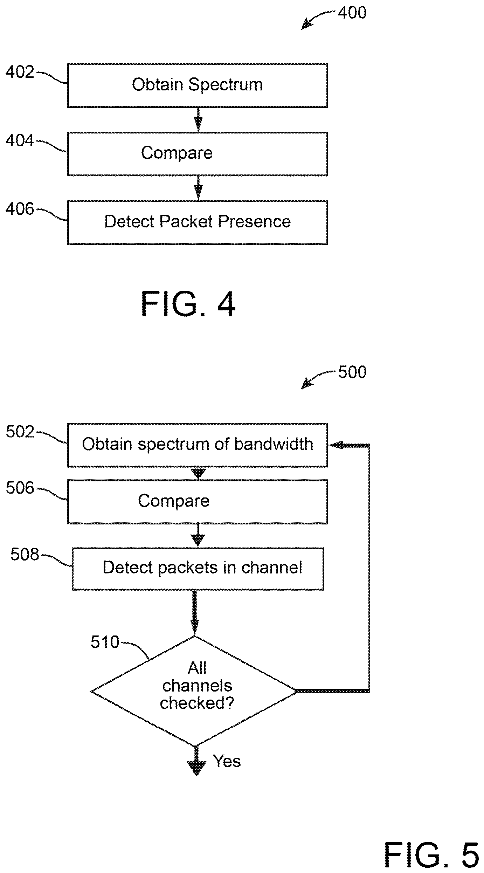

With reference to FIGS. 3A-4, traffic detection and blindness recovery can be performed using flow 400. In an operation 402, spectrum energy is obtained (e.g., G1E, G2E, E1E-E4E). At an operation, the spectrum energy E1E-E4E of tones E1-E4 are compared to the spectrum energy G1E and G2E. Average energy values can be used. At an operation 404, the comparisons are used to detect a presence of traffic. If both of these conditions (one of energy E1E-E4E is below a noise power threshold and E1E - G1E > th or (E4E - G2E > th) are satisfied on a particular sub band, the particular sub band has a Wi-Fi energy and an OFDM packet is present. If wide band or OFDM traffic is not present, device 221 can synchronize on the channel and recover from blindness in some embodiments. Synchronization can occur immediately as opposed to a standard synchronization and collision detection procedure in some embodiments. Flow 400 can also be used after a sleep mode. In some embodiments, the noise power threshold or noise threshold represents an amount of energy above which a signal is not likely to be noise and can be a signal to noise threshold.

With reference to FIGS. 3A-5, traffic detection and blindness recovery can be performed using flow 500 which can be similar to flow 400. In an operation 502, spectrum energy is obtained (e.g., G1E, G2E, E1E-E4E) and checked for packet presence on a subband in operations 560 and 508. If a packet is present on the subband, all of the other subbands are checked. Unused subbands can be used for puncture communication in some embodiments. All subbands for a particular configuration or operation can be checked and the data unified to determine the total BW for the signal or packet. For example, if energy is detected in the first and the last subband, the packet is detected as an 80MHz packet in some embodiments.

If a packet is not present, device 221 can synchronize on the channel and recover from blindness in some embodiments. If a packet is present, device 221 determines if all desired channels have been checked in an operation 510. If not, device 221 advances to operation 502 and another channel is checked. If so, device 221 waits, and returns to operation 502 or begins an ordinary synchronization at the appropriate time. Operations 502, 506, and 508 can use flow 400.

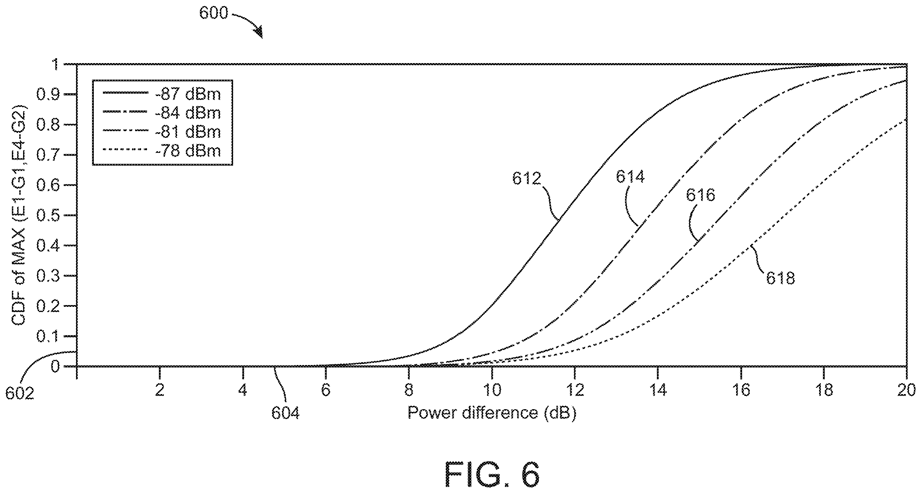

With reference to Fig. 6, a graph 600 includes an X-axis 604 representing power difference and a Y axis 602 representing probability of packet presence based upon the maximum of (E1E-G1E and E4E-G2E). The power difference is reference power minus edge power (average power E1E and E4E - average G1E and G2E, respectively) in some embodiments. Curves 612, 614, 616, and 618 represent signals at -78dBm, -81dBm, -84 dBm and -87 dBm energy levels. An 8 dB threshold of power difference for packet detection provides a reliable threshold value for the signals represented by curves 612, 614, 616, and 618. In some embodiments, the signals are each 20 MHz additive white Gaussian noise (AWGN) OFDM signals with a bandwidth of 20 MHz, transmitted over a channel affected by Additive White Gaussian Noise (AWGN).

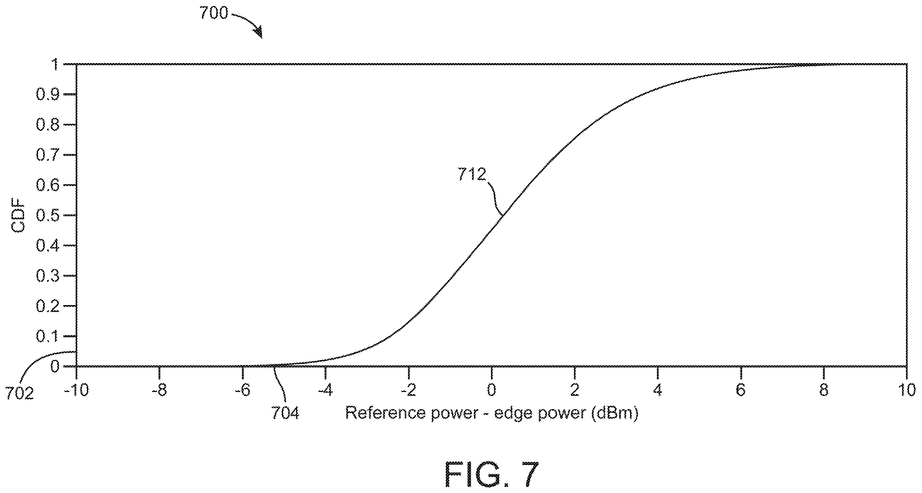

With reference to Fig. 7, a graph 700 includes an X-axis 704 representing power difference and a Y axis 702 representing probability of packet presence based upon the maximum of (E1E-G1E and E4E-G2E). Graph 700 represents the probability of false alarm for a random Gaussian signal. The power difference is reference power minus edge power (average power E1E and E4E - average G1E and G2E, respectively). Curve 712 shows that for the 8 dBm threshold of power difference, the probability of false alarm is less than 0.5 percent.

Embodiments of the apparatuses and processes thus generally described above, may be better understood by reference to the IEEE 802.11 standards, which provides additional details on certain signals and operations disclosed herein, and is not intended to be limiting of the apparatuses or processes described above in any manner. (IEEE) standards which are hereby incorporated in full into the present disclosure (particularly, 802.11-2020; 802.11ax^{™}-2021 IEEE Std 802.11ax^{™}-2021: Enhancements for High Efficiency WLAN (Amendment 1), IEEE P802.11be^{™}/D2.2, and IEEE P802.11-REVme^{™}/D1.3). In some embodiments, a WiFi network may refer to wireless network that has Internet access.

Circuitry or circuit may refer to any electronic circuit or combination of circuits. To the extent that a device, circuit, processor or circuitry is described or recited in a claims as performing one or more operations or functions or as configured to perform to one or more operations or functions, the performance of the recited function(s) or operation(s) can be distributed across two or more devices, circuits, or processors without departing from the scope of the claims unless those functions or operations are explicitly recited as being performed on a specific single circuit or set of circuits, processor, or device (e.g. using the phrase "on a single circuit", "on the set of circuits comprising" or "on a single device").

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed, and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A first device, comprising:
an antenna;
a circuit configured to provide data using the antenna across a connection comprised of one or more links to a second device, wherein
the circuit is configured to detect a presence of at least a portion of a packet using a relationship of a guard tone and a signal tone in a bandwidth and synchronize to a channel if the packet is not present.

2. The first device of claim 1, wherein
the bandwidth is 20 megahertz.

3. The first device of claim 1 or 2, wherein
the circuit is configured to detect the presence using a relationship of the signal tone to a first threshold;
wherein in particular
the first threshold is a fixed threshold.

4. The first device of any one of the claims 1 to 3, wherein
the circuit is configured to detect the presence using a comparison of the relationship of the guard tone and the signal tone in the bandwidth to a second threshold.

5. The first device of any one of the claims 1 to 4, wherein
the packet is a orthogonal frequency domain multiplexing packet;
or
the packet is a wideband packet.

6. The first device of any one of the claims 1 to 5, wherein
the circuit is part of an access point or station.

7. A first device, comprising:
an antenna;
a circuit configured to provide packets using the antenna across a connection comprised of one or more links to a second device, wherein
the circuit comprises a spectrum module configured to provide spectrum data indicative of energy in a bandwidth and a detector configured to detect a presence of at least a portion of a packet using the spectrum data in response to a relationship of energy of a guard tone and a signal tone in the bandwidth.

8. The first device of claim 7, wherein
the circuit is used to recover from blindness;
and/or
the circuit is configured to detect the packet without detecting a preamble.

9. The first device of claim 7 or 8, wherein
the spectrum data comprises received-signal-strength-indicator (RSSI) values.

10. The first device of any one of the claims 7 to 9, wherein
the detector is configured to detect the using a relationship of the guard tone and the signal tone in the bandwidth.

11. The first device of claim 10, wherein
the detector is configured to detect the presence using a relationship of a set of signals tones to a first threshold.

12. The first device of claim 10, wherein
the relationship of the guard tone and the signal tone is compared to a threshold;
wherein in particular
the threshold is 8 decibels.

13. A method of recovering from blindness in a communication system, the method comprising:
providing spectrum data for a bandwidth indicative of energy using an antenna;
determining a first relationship between a set of signals tones in the bandwidth is above a first threshold using the spectrum data;
determining a second relationship between energy of a guard tone and a signal tone in the bandwidth using the spectrum data; and
detecting a presence of at least a portion of a packet in response to the first relationship and the second relationship.

14. The method of claim 13, wherein
the second relationship is a difference between the energy of the guard tone and the signal tone.

15. The method of claim 13 or 14, wherein
the first relationship is a comparison of the signal tone and a threshold;
wherein in particular
the threshold is a noise threshold.
